# EUROPÄISCHE PATENTANMELDUNG

(11) **EP 1 434 035 A1**
(43) Veröffentlichungstag der Anmeldung: **30.06.2004**
(21) Anmeldenummer: 03027112.6
(22) Anmeldetag: 26.11.2003
(51) Int. Cl.: G01F 1/58

(54) **Magnetisch induktiver Durchflussmesser**

(30) Priorität: 21.12.2002 DE 10260414
(71) Anmelder: ABB PATENT GmbH, 68526 Ladenburg (DE)
(72) Erfinder: Herwig, Jörg, Dipl.-Ing., 37139 Adelebsen (DE); Keese, Dieter, 37194 Wahlsburg (DE); Schwiderski, Hans, Dipl.-Ing., 37176 Nörten-Hardenberg (DE)
(74) Vertreter: Schmidt, Karl Michael

(57) **Zusammenfassung**

Die Erfindung bezieht sich auf einen magnetischen induktiven Durchflussmesser mit einem Messrohr (1), dem eine Anordnung zur Erzeugung eines magnetischen Feldes (B) derart zugeordnet ist, dass ein das Messrohr ( 1 ) durchströmendes Medium im wesentlichen senkrecht vom magnetischen Feld (B) durchsetzbar ist und bei dem ein Elektrodenpaar (5), bestehend aus gegenüberliegenden Elektroden (5), signalerzeugend zum Magnetfeld (B) und quer zur Längsachse (Z) des Messrohres ( 1 ) angeordnet ist. Um einen niedrigen Gleichtaktwiderstand für einen Durchflussmesser zu erhalten, wird vorgeschlagen das Messrohr (1) mit genormter Einbaulänge in einen elektrisch isolierenden Bereich (2) und einen elektrisch leitenden Bereich (3,4) zu unterteilen. In einer besonderen Ausführungsform wird der elektrisch isolierende Bereich (2) des Messrohres beidseitig von elektrisch leitfähigen Bereichen (3, 4) des Messrohres begrenzt. Dadurch wird der Abstand zum erdungspotential erheblich verkürzt, wodurch sich ein niedriger Gleichtaktwiderstand ergibt, der keine aufwendige Abschirmung der Auswerteschaltungen (V1-V3) erfordert.

## Beschreibung

Die Erfindung bezieht sich auf einen magnetischen induktiven Durchflussmesser mit einer Anordnung zur Erzeugung eines magnetischen Gleichfeldes, die bezüglich einer Strömungsvorrichtung so angeordnet ist, dass ein in der Strömungsvorrichtung strömendes Medium im wesentlichen senkrecht vom einem Magnetfeld durchsetzbar ist und bei dem ein erstes Elektrodenpaar, bestehend aus gegenüberliegenden Elektroden, signalerzeugende zum Magnetfeld und quer zur Längsachse der Strömungsvorrichtung angeordnet ist.

Magnetisch-induktive Durchflussmesser werden zur Messung des Durchflusses von Flüssigkeiten, Breien und Pasten mit einer bestimmten elektrischen Mindestleitfähigkeit eingesetzt. Diese Geräte verursachen bei der Messung keinen Druckverlust und haben keine beweglichen oder in das Messrohr hineinragende Teile, so dass sie verschleißfrei arbeiten. Die Art der Messung des Durchflusses ist unabhängig von Dichte, Temperatur, Viskosität und Druck. Sie wird kaum von Ablagerungen und Verschmutzungen sowie Strömungsprofileinflüssen beeinflusst.

Anwendung finden diese Durchflussmesser in Prozessen, im Wasser- beziehungsweise Abwasserbereich und in chemischen Anlagen.

Besonders sind Durchflussmesser für kontinuierliche Strömungen geeignet, sie können aber auch zur Messung von pulsierenden Volumenströmen oder Zweiphasen-Messstoffen eingesetzt werden. Weiter finden Durchflussmesser Anwendung beim Abfüllen und Dosieren von Flüssigkeiten, wobei sie sowohl beim Abfüllen und Dosieren von kleinsten als auch sehr großen Mengen eingesetzt werden. Hier werden sie in der Nahrungsmittelindustrie, Pharmazie, Chemie sowie der Kosmetikindustrie eingesetzt.

Wichtige Kriterien für Durchflussmesser sind einerseits die Ansprechzeit, d.h. die Zeit die notwendig ist, um den Durchfluss zu messen und andererseits der Energieverbrauch, da die Durchflussmesser auch an Orten eingesetzt werden, an denen jede zusätzliche Energiezufuhr sehr aufwendig zu realisieren ist. Ein weiteres wichtiges Kriterium ist der schaltungstechnische Aufwand, der notwendig ist, um aus dem induzierten Messsignal eine verwertbare Signalform zu generieren, da aufgrund von Störungen des Magnetfeldes und wegen elektrochemischer Störspannungen das Messsignal zuerst von diesen Störungen separiert werden muss. Außerdem sind die Schaltungen wegen der notwendigen räumlichen Nähe zum Durchflussmesser auch dem Magnetfeld ausgesetzt und werden auch gestört.

Durchflussmesser sind sehr einfach aufgebaut und an viele Rohrdurchmesser anpassbar und in unterschiedlichen Materialausführungen, z.B. Edelstahl realisierbar. Sie haben eine genormte Einbaulänge.

In besonderen Ausführungsformen ist eine beidseitige Erfassung des Durchflusses, d.h. sowohl des Hin- als auch des Rückflusses als auch ein Leerlauf erfassbar.

Das erzeugte Messsignal wird einer elektronischen Steuer- und Messschaltung zugeführt, die beispielsweise ein Display ansteuert oder das Signal über einen Bus an eine Steuerzentrale liefert. Das Messsignal kann sowohl passiv über einen Optokoppler als auch aktiv über ein Impulssignal abgegeben werden. Aus dem gewonnenen Messsignal lassen sich unterschiedliche Größen, wie der momentane Durchfluss in l/s, der Gesamtdurchfluss in m³, die momentane Flussrichtung, einstellbare Grenzwertüberschreitungen beziehungsweise -unterschreitungen ermitteln.

Es sind magnetisch induktive Durchflussmesser bekannt, die mit zeitlich änderbaren Magnetfeldern betrieben werden. Diese Durchflussmesser benötigen zur Erzeugung eines zeitlich änderbaren Magnetfeldes, das auch als Wechselfelder bezeichnet wird, Energie.

Darüber hinaus sind Durchflussmesser bekannt, die mit einem Permanentmagneten betrieben werden. In der DE 198 31 491 wird ein Verfahren und eine Vorrichtung zur magnetisch induktiven Messung des Volumendurchflusses von Fluiden mit Permanentmagneten beschrieben.

Bei Durchflussmessern ist die Einbaulänge vorgenormt. Dadurch ergibt sich insbesondere bei Durchflussmessern mit kleinen Rohrdurchmessern das Problem, das diese aufgrund der vorgeschriebenen Einbaulänge einen sehr großen Gleichtaktwiderstand aufweisen. Der Gleichtaktwiderstand ist der Innenwiderstand der Signalquelle gegen Masse, d.h. der Abstand von der Signalquelle bis zu einem geerdeten Rohrabschnitt. Der Gleichtaktwiderstand bei magnetischen induktiven Durchflussmessern ist bei gegebener Leitfähigkeit des Mediums durch die Größe der Elektrodenoberfläche einerseits und den Abstand zum bezugspotentialliefernden Rohranschluss gegeben. Hohe Gleichtaktwiderstände erfordern einen hohen Abschirmaufwand bei den auswertenden Signalkreisen.

Bei induktiven Durchflussmessern nach dem Stand der Technik ist der gesamte Messrohrabschnitt des induktiven Durchflussmessers isolierend ausgebildet, so dass der Abstand zur bezugsbildenden Masse wegen der genormten Einbaulänge hoch ist. Bei großen Nenndurchmessern des Rohres hat die Länge des isolierenden Bereiches weniger Einfluss auf den Gleichtaktwiderstand, da der Durchmesser verhältnismäßig groß ist. Bei kleinen Nenndurchmessern nimmt der Gleichtaktwiderstand aufgrund der genormten Einbaulänge unverhältnismäßig stark zu.

Vor dem Hintergrund des großen Abstandes zur bezugsliefernden Masse, insbesondere bei kleinen Nenndurchmessern, ergibt sich die Aufgabe, einen induktiven Durchflussmesser anzugeben, der einen niedrigen Gleichtaktwiderstand aufweist.

Diese Aufgabe wird bei einem Durchflussmesser gelöst, bei dem das Messrohr in einen elektrisch isolierenden Bereich und einen elektrisch leitenden Bereich unterteilt ist.

Dadurch erreicht man, dass bei den genormten Einbaulängen der Durchflussmesser, der Abstand zum Erdungspotential im Vergleich zu Durchflussmessern nach dem Stand der Technik verkürzt wird, wodurch auch der Gleichtaktwiderstand verkleinert wird. Der Gleichtaktwiderstand wird dabei aus dem Widerstand, den die Elektroden zum Erdungspotential haben, gebildet. Dieser wird durch die geometrischen Flächen der Elektroden und des Rohrinnendurchmessers und der elektrischen Leitfähigkeit/cm des Mediums gebildet.

Bei Durchflussmessern nach dem Stand der Technik ist der gesamte Bereich des Messrohres elektrisch isolierend ausgebildet. Das zur Signalquelle nächstliegende Erdungspotential ergibt sich damit erst durch den Anschluss eines Durchflussmessers an elektrisch leitfähige Zuleitungsrohre, so dass der Abstand zur bezugsbildenden Masse wegen der genormten Einbaulänge recht hoch ist. Bei elektrisch isolierenden Zuleitungsrohren müssen an den Rohrenden des Messrohres Erdungselektroden angeordnet werden, um ein bezugsbildendes Erdungspotential anzuschließen.

Die Aufteilung des in der Einbaulänge genormten Messrohres in einen elektrisch leitfähigen Bereich und einen elektrisch isolierenden Bereich verkleinert damit den Gleichtaktwiderstand, so dass die Eingangskreise der Auswerteschaltung unaufwendig ausgeführt sein können und auch die Signalkreise nicht aufwendig abgeschirmt sein müssen.

In einer vorteilhaften Ausgestaltung der Erfindung wird das Messrohr in wenigstens drei Bereiche unterteilt, wobei der elektrisch isolierende Bereich in der Mitte zwischen den zwei elektrisch leitfähigen Bereichen des Messrohres angeordnet ist, so dass der Abstand der Signalquelle zum Erdungspotential gegenüber dem Stand der Technik verkürzt und damit der Gleichtaktwiderstand verkleinert wird.

Bei dieser vorteilhaften Ausgestaltung der Erfindung ergibt sich ein Gleichtaktwiderstand, der vom jeweiligen Innendurchmesser des Messrohres und der Leitfähigkeit des Mediums und vom Abstand zu den Erdungselektroden abhängig ist. Der Widerstand hängt somit vom räumlichen Abstand der Flächen, die vom Medium berührt werden, ab. Bei der Dreiteilung des Messrohres wird es möglich, dass Erdungspotential mit der größtmöglichen Fläche, durch das zylinderförmige Rohr, so dicht wie messtechnisch sinnvoll in z-Richtung an die Messelektroden heranzuführen.

Die Dreiteilung des Messrohres ist insbesondere deshalb vorteilhaft, da sich eine so ergebende Symmetrie beim Aufbau vorteilhaft bei der Auswertung der erzeugten Signale auswirkt und damit der Aufwand bei der Auswerteschaltung niedrig bleibt.

In einer weiteren vorteilhaften Ausgestaltung werden der oder die elektrisch leitfähigen Bereiche des Messrohres durch elektrisch leitfähige Rohrabschnitte gebildet. Die Rohrabschnitte sind dazu beispielsweise nicht elektrisch isolierend ausgekleidet, so dass das Strömungsmedium mit dem oder den leitfähigen Rohrabschnitten in Verbindung kommt und sich somit ein niedriger Gleichtaktwiderstand ergibt. Diese Ausgestaltung findet insbesondere beim Einbau eines Durchflussmessers in elektrisch leitfähige Zuleitungsrohre Anwendung.

In einer weiteren vorteilhaften Ausgestaltung werden der oder die elektrisch leitfähigen Bereiche des Messrohres durch umlaufende Erdungselektroden gebildet. In Anwendungsfällen, bei denen elektrisch isolierende Zuleitungsrohre verwendet werden, wird in das Messrohr eine um den Rohrumfang umlaufende Erdungselektrode angeordnet, die mit dem Strömungsmedium in Kontakt kommt. Dadurch wird auch für diese Anwendungen, insbesondere für kleine Rohrdurchmesser, eine Möglichkeit geschaffen, bei der der Gleichtaktwiderstand niedrig bleibt. Ein akzeptabler Gleichtaktwiderstand weist Werte auf, die im kOhm-Bereich liegen

Eine Erdungselektrode kann auch als an das Messrohr angeschlossener Erdungsflansch ausgebildet sein.

Im folgenden wird ein Ausführungsbeispiel der Erfindung anhand der Figuren erläutert. Es zeigen:
- Fig. 1:: Schnittdarstellung durch einen erfindungsgemäßen induktiven Durchflussmesser;
- Fig. 2 :: Schaltbild eines induktiven Durchflussmessers mit Dreiteilung

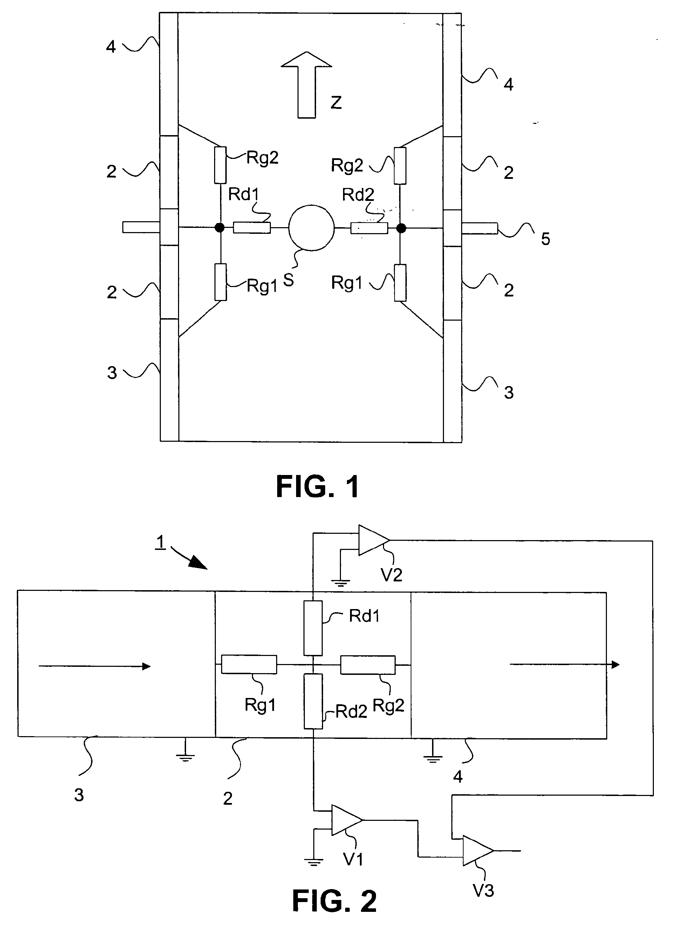

Figur 1 zeigt eine Schnittdarstellung durch einen Durchflussmesser. Das Strömungsmedium fließt in Z-Richtung. Die Elektroden 5 sind im wesentlichen senkrecht zu dem Strömungsmedium angeordnet. Die Anordnung zur Erzeugung des Magnetfeldes lässt sich der besseren Übersichtlichkeit wegen, nicht darstellen. Das Messrohr 1 wird im wesentlichen senkrecht zum Strömungsmedium und auch senkrecht zu den Elektroden 5 vom Magnetfeld B durchsetzt. Dabei stehen die Magnetfeldlinien senkrecht zur Zeichnungsebene. Das Messrohr 1 ist dreigeteilt. Dabei wird der elektrisch isolierende Bereich 2 beidseitig von elektrisch leitfähigen Bereichen 3, 4 begrenzt. In dem elektrisch isolierenden Bereich 2 sind die Elektroden 5 angeordnet, die zur Signalerzeugung mit dem Strömungsmedium in Kontakt stehen. Die Signalquelle S ist schematisch in der Mitte des Messrohres dargestellt. Für die Berechnung des Gleichtaktwiderstandes ist einerseits der Innenrohrdurchmesser relevant. Diese Widerstandsanteile werden mit Rd1 und Rd2 bezeichnet. Weiter ist für den Gleichtaktwiderstand, der Abstand zum bezugsbildenden Erdungspotential von Bedeutung. Dieser Abstand wird in diesem Modell durch die Teilwiderstände Rg1 und Rg2 dargestellt.

Figur 2 zeigt einen Durchflussmesser mit angeschlossenen Verstärkereinheiten. Hier sind die Teilwiderstände Rg1 und Rg2 zusammengefasst dargestellt. Die elektrisch leitfähigen Rohrabschnitte 3 und 4 sind zusätzlich noch mit Erdungselektroden versehen.

Dieses in den Figuren 1 und 2 gezeigte Ausführungsbeispiel nutzt die symmetrische Aufteilung des Messrohres aus, da die Widerstände Rg1 und Rg2 gleich groß sind und bei der Auswertung keine Unsymmetrie berücksichtigt werden muss. Das induzierte Messsignal wird Verstärkereinheiten V1 und V2 zugeführt, die jeweils eine Verstärkung vornehmen. Die verstärkten Signale werden wiederum einer Verstärkereinheit V3 zugeführt, die ein Signal mit einer Spannung erzeugt, dass dem Durchfluss proportional ist und in Form und Stärke zur Zuführung zu einer nicht dargestellten Steuer- oder Regeleinheit geeignet ist.

Bei einem Durchflussmesser nach dem Stand der Technik sind die Widerstände Rg1 und Rg2 wesentlich größer, da der Abstand von der Signalquelle S bis zu den Enden des Messrohres reichen würde, d.h. die Länge der in Figur 1 und 2 gezeigten elektrisch leitfähigen Bereiche 3 und 4 würde noch zu dem Widerstand hinzukommen.

### Bezugszeichenliste

- 1: Messrohr
- 2: Isolierender Bereich
- 3: elektrisch leitfähiger Bereich
- 4: elektrisch leitfähiger Bereich
- 5: Elektroden
- Rg1: Widerstand aus Abstand von Signalquelle zum Erdungspotential des elektrisch leitfähigen Bereichs 3
- Rg2: Widerstand aus Abstand von Signalquelle zum Erdungspotential des elektrisch leitfähigen Bereichs 3
- Rd1: Widerstand von der Signalquelle bis zur linkseitigen Elektrode des Messrohres
- Rd2: Widerstand von der Signalquelle bis zur rechtseitigen Elektrode des Messrohres
- S: Signalquelle
- B: Magnetfeld
- Z: Strömungsrichtung, Längsachse des Messrohres
- V1: Verstärkereinheit
- V2: Verstärkereinheit
- V3: Verstärkereinheit

## Patentansprüche

1. Durchflussmesser mit einem Messrohr (1), dem eine Anordnung zur Erzeugung eines magnetischen Feldes (B) derart zugeordnet ist, dass ein das Messrohr (1) durchströmendes Medium im wesentlichen senkrecht vom magnetischen Feld (B) durchsetzbar ist und bei dem ein Elektrodenpaar (5), bestehend aus gegenüberliegenden Elektroden (5), signalerzeugend zum Magnetfeld (B) und quer zur Längsachse (Z) des Messrohres (1) angeordnet ist,
**dadurch gekennzeichnet, dass** das Messrohr (1) in einen elektrisch isolierenden Bereich (2) und einen elektrisch leitenden Bereich (3,4) unterteilt ist.

2. Durchflussmesser nach Anspruch 1,
**dadurch gekennzeichnet, dass** der elektrisch isolierenden Bereich (2) des Messrohres beidseitig von elektrisch leitfähigen Bereichen (3, 4) des Messrohres begrenzt ist.

3. Durchflussmesser nach Anspruch 1,
**dadurch gekennzeichnet, dass** der isolierende Bereich (2) mindestens dem 1 bis 1,5-fachen des Durchmessers des Messrohres entspricht.

4. Durchflussmesser nach Anspruch 1 oder 2,
**dadurch gekennzeichnet, dass** der elektrisch leitfähige Bereich des Messrohres als umlaufende Erdungselektrode ausgebildet ist.

5. Durchflussmesser nach Anspruch 1 oder 2,
**dadurch gekennzeichnet, dass** der elektrisch leitfähige Bereich des Messrohres als elektrisch leitfähiger Rohrabschnitt (3, 4) ausgebildet ist.
